# EUROPEAN PATENT APPLICATION

(11) **EP 2 540 610 A1**
(43) Date of publication of application: **02.01.2013**
(21) Application number: 11172376.3
(22) Date of filing: 01.07.2011
(51) Int. Cl.: B62M 9/124

(54) **Rear derailleur for a bicycle**

(71) Applicant: Lin, Chang Hui, Province of China (TW)
(72) Inventor: Lin, Chang Hui, Province of China (TW)
(74) Representative: Beck & Rössig European Patent Attorneys

(57) **Abstract**

A multiple sprocket assembly includes a number of sprockets (12) attached to a hub (10) of a frame (11), and a rear chain transfer device (2) having a slide (50) attached to a guide device (30), and a carrier (60) attached to the slide (50) and movable relative to the sprockets (12) for engaging with a chain and for carrying and moving the chain onto the teeth (13) of the sprockets (12), the rear chain transfer device (2) includes a support (20) attached to the frame (11), and the guide device (30) is secured to the support (20), the guide device (30) includes one or more tracks or channels (34) for engaging with and for guiding the slide (50) to move relative to the guide device (30).

## Description

The invention relates to a multiple sprocket assembly for a bicycle including a carrying or moving device for smoothly moving the chain over or onto the sprockets.

Typical multiple sprocket assemblies comprise a number of sprockets attached onto the hub with bearing members or one-way clutch mechanisms, and a front chain transfer device and a rear chain transfer device for moving the chain onto the sprockets.

However, the chain should be scraped with the sprockets, but may not be directly engaged with the teeth of the sprockets without scraping or scrubbing with the sprockets.

The invention is to provide a multiple sprocket assembly including a carrying or moving device for smoothly carrying or moving the chain over or onto the sprockets.
FIG. 1 is an exploded view of a multiple sprocket assembly;
FIGS. 2, 3 are partial perspective views of the assembly;
FIG. 4 is a perspective view of a guide rail; and
FIG. 5 is a side plan view of the guide rail.

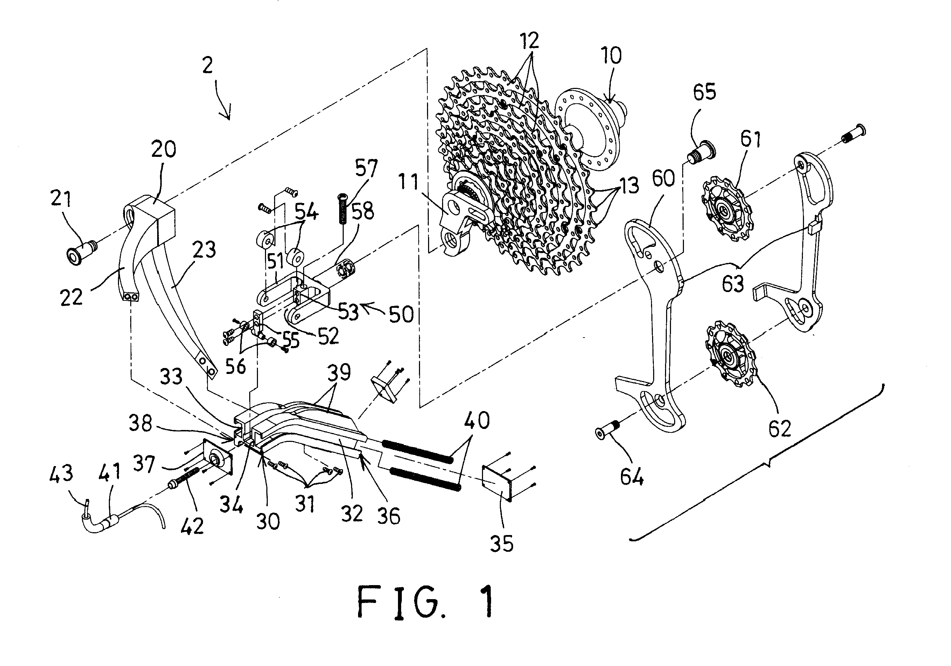

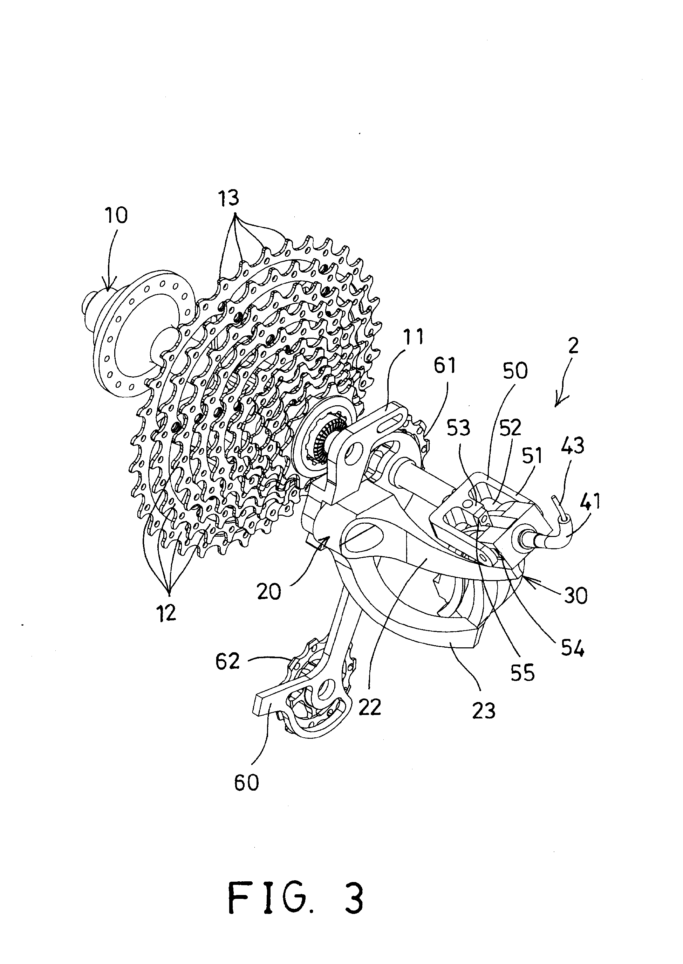

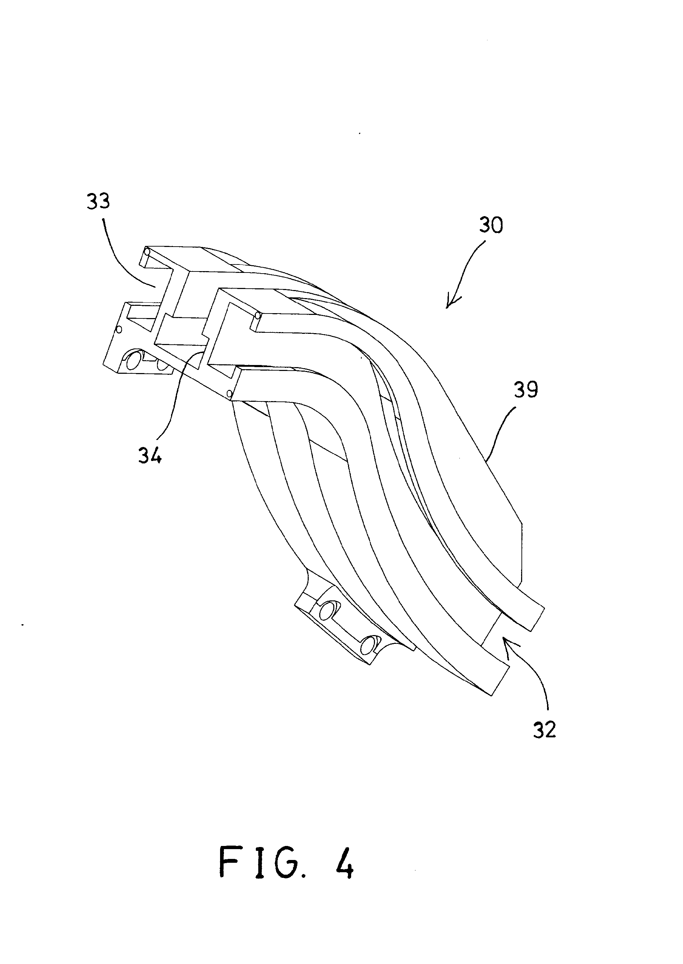

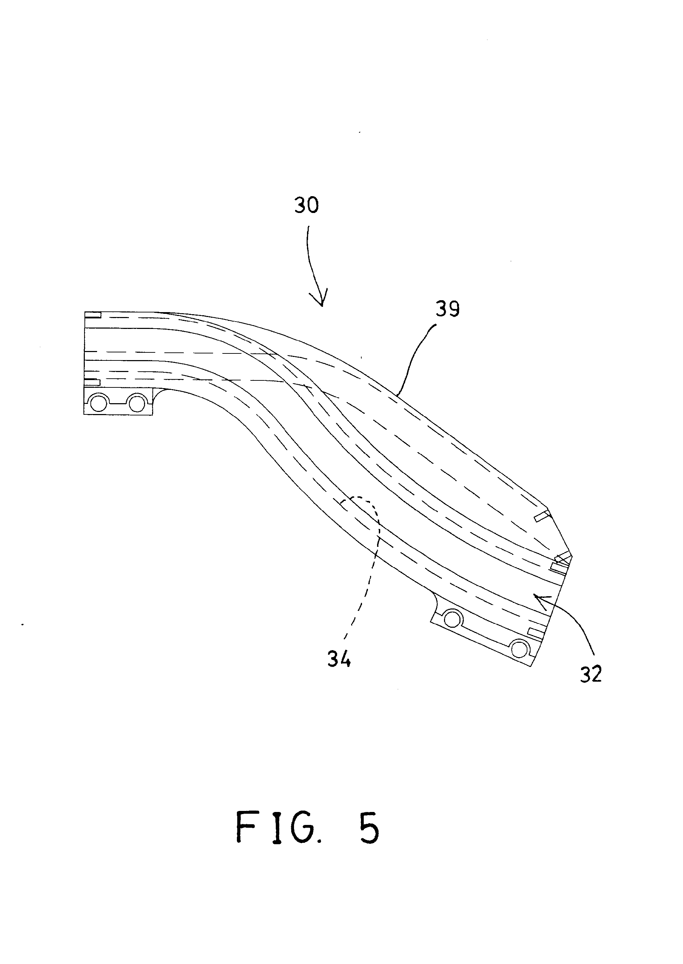

Referring to FIGS. 1-3, a multiple sprocket assembly comprises a hub 10 attached to a bicycle frame 11, a number of sprockets 12 attached to the hub 10 for engaging with a chain, and a front chain transfer device and a rear chain transfer device 2 attached to the frame 11 for moving the chain over or onto the teeth 13 of each sprocket 12. The rear chain transfer device 2 includes a support 20 attached to the frame 11 with fasteners 21 and having one or more (such as two) extensions 22, 23, and includes a guide rail or device 30 attached to the extensions 22, 23 or to the frame 11 with fasteners 31, or formed integral with the support 20, the guide device 30 includes one or more (such as two) outer or side tracks 32, 33 and a middle channel 34 located between the side tracks 32, 33 (FIGS. 1, 4-5).

One or more (such as two) end caps 35 are attached to one end 36 of the guide device 30 for blocking the tracks 32, 33, and a cover 37 is attached to the other end 38 of the guide device 30 for blocking the tracks 32, 33 and the middle channel 34. The guide device 30 includes a cam or guiding bulge 39, and a spring 40 engaged into the tracks 32, 33 and located close to the end caps 35. A guide tube 41 is attached to the cover 37 or to the other end 38 of the guide device 30 with fasteners 42 for engaging with a pulling cable 43 and for guiding the cable 43 to move relative to the support 20 and the guide device 30, in which the cable 43 is coupled to a shift lever that may pull the cable 43 to actuate a slide 50 and a carrier 60 to move the chain onto the sprockets 12.

The slide 50 is attached to the guide device 30, and includes a space 52 provided between two arms 51, a protrusion 53 extended into the space 52, and one or more bearing members 54 attached to each arm 51 and engaged in the side tracks 32, 33 for guiding the slide 50 to move relative to or along the guide device 30, and includes a bar 55 attached to the protrusion 53. The bar 55 is engaged in the middle channel 34 of the guide device 30 for attaching one or more bearing members 56 which are engaged in the middle channel 34 of the guide device 30. The cable 43 is attached to the slide 50 with fasteners 57 for allowing the slide 50 to be moved relative to or along the guide device 30 with the cable 43. The slide 50 includes a stud 58 for mounting a cage assembly or chain carrier 60.

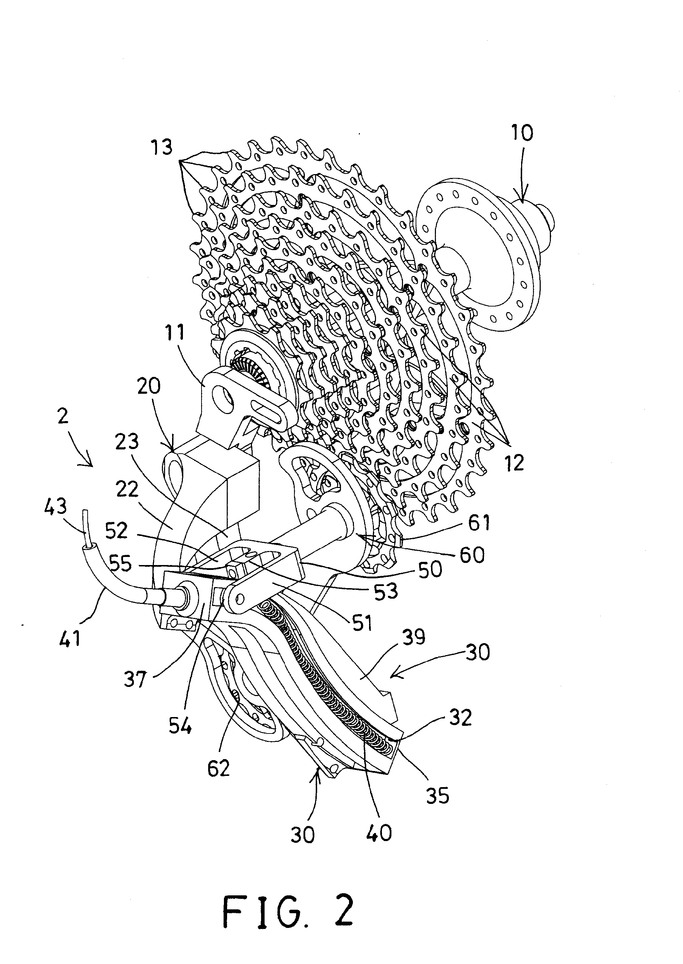

The chain carrier 60 includes one or more (such as two) jockey wheels 61, 62 mounted between two parallel plates 63 with fasteners 64 for engaging with the chain, and the carrier 60 is attached to the stud 58 or the slide 50 with fasteners 65. The carrier 60 may be moved relative to the sprockets 12 (FIGS. 2-3) by the sliding movement of the slide 50 relative to the support 20 and the guide device 30 for moving the chain onto the sprockets 12. The slide 50 may be engaged with the bulge 39 which may be shaped to guide the carrier 60 to move the chain onto the sprockets 12. The springs 40 are engaged with the bearing members 54 or the arms 51, the bearing members 54 or the arms 51 of the slide 50 may move onto the springs 40 when the slide 50 and the carrier 60 are moved relative to the support 20 and the guide device 30 and moved toward the cover 37 or the other end 38 of the guide device 30 with the cable 43, and the springs 40 may bias the slide 50 and the carrier 60 toward the end caps 35 or the one end 36 of the guide device 30 when the cable 43 is released.

In operation, the carrier 60 may be moved relative to the sprockets 12 (FIGS. 2-3) by the sliding movement of the slide 50 relative to the support 20 and the guide device 30 and with the cable 43, in order to carry and move the chain onto the teeth 13 of the sprockets 12, the spring 40 may bias or recover the slide 50 and the carrier 60 when the cable 43 or the shift lever is released.

## Claims

1. A multiple sprocket assembly comprising a plurality of sprockets (12) attached to a hub (10) of a frame (11), the sprockets (12) each including a plurality of teeth (13), and a rear chain transfer device (2) attached to the frame (11), **characterized in that**:
the rear chain transfer device (2) includes a guide device (30), a slide (50) slidably attached to the guide device (30), and a carrier (60) attached to the slide (50) and movable relative to the sprockets (12).

2. An assembly as claimed in claim 1, wherein the rear chain transfer device (2) includes a support (20) attached to the frame (11), and the guide device (30) is secured to the support (20).

3. An assembly as claimed in claim 1 or 2, wherein the guide device (30) includes at least one track (32) for engaging with the slide (50).

4. An assembly as claimed in claim 3, wherein the slide (50) includes at least one bearing member (54) engaged with the track (32) of the guide device (30).

5. An assembly as claimed in claim 3 or 4, wherein the guide device (30) includes an end cap (35) attached to the guide device (30).

6. An assembly as claimed in one of claims 1 to 5, wherein the guide device (30) includes a cable (43) coupled to the slide (50).

7. An assembly as claimed in claim 6, wherein the guide device (30) includes a cover (37), and a guide tube (41) attached to the cover (37).

8. An assembly as claimed in one of claim 1 to 7, wherein the guide device (30) includes a channel (34) for engaging with the slide (50).

9. An assembly as claimed in claim 8, wherein the slide (50) includes at least one bearing member (56) engaged with the channel (34) of the guide device (30).

10. An assembly as claimed in claim 9, wherein the slide (50) includes a bar (55) for attaching the bearing member (56).
